# EUROPÄISCHE PATENTSCHRIFT

(11) **EP 3 167 260 B1**
(45) Veröffentlichungstag und Bekanntmachung des Hinweises auf die Patenterteilung: **11.08.2021**
(21) Anmeldenummer: 16700187.4
(22) Anmeldetag: 08.01.2016
(51) Int. Cl.: G01J 1/02, G01M 11/00

(54) **VERFAHREN ZUR RICHTUNGSABHÄNGIGEN MESSUNG MINDESTENS EINER LICHTTECHNISCHEN ODER RADIOMETRISCHEN KENNGRÖSSE EINER OPTISCHEN STRAHLUNGSQUELLE**
METHOD FOR THE DIRECTION-DEPENDENT MEASUREMENT OF AT LEAST ONE LIGHTING OR RADIOMETRIC CHARACTERISTIC VARIABLE OF AN OPTICAL RADIATION SOURCE
PROCÉDÉ DESTINÉ À MESURER, EN FONCTION DE LA DIRECTION, AU MOINS UNE CARACTÉRISTIQUE RADIOMÉTRIQUE OU PHOTOMÉTRIQUE D'UNE SOURCE DE RAYONNEMENT

(30) Priorität: 22.01.2015 DE 102015201093
(43) Veröffentlichungstag der Anmeldung: 17.05.2017
(73) Patentinhaber: LMT Lichtmesstechnik GmbH Berlin, 10587 Berlin (DE); TechnoTeam Bildverarbeitung GmbH, 98693 IImenau (DE)
(72) Erfinder: HAMMER, Raymund, 14057 Berlin (DE); DIEM, Carsten, 13505 Berlin (DE); ULRICH, Horst-Günther, 12169 Berlin (DE); REINERS, Thomas, 10589 Berlin (DE)
(74) Vertreter: Müller, Wolfram Hubertus
(86) Internationale Anmeldenummer: PCT/EP2016/050267
(87) Internationale Veröffentlichungsnummer: WO 2016/116300

(56) Entgegenhaltungen:
- JP-A- 2005 300 477
- US-A- 5 426 500
- US-A- 5 504 574
- US-A- 5 729 336
- US-A1- 2012 194 820
- US-A1- 2013 265 570
- LEWIN ET AL: "Advances in Measurement Technology for Vehicle Lighting Systems", SAE TECHNICAL PAPER,, Bd. Paper 960919, 1. Februar 1996 (1996-02-01), Seiten 107-114, XP009189051,
- HSIEN-HUANG P WU ET AL: "Fast measurement of automotive headlamps based on high dynamic range imaging", APPLIED OPTICS, OPTICAL SOCIETY OF AMERICA, WASHINGTON, DC; US, vol. 51, no. 28, 1 October 2012 (2012-10-01), pages 6870-6880, XP001578446, ISSN: 0003-6935, DOI: 10.1364/AO.51.006870 [retrieved on 2012-10-01]
- Chr. Schwanengel: "Gegenüberstellung von Messtechniken zur Messung von Lichtstärkeverteilungen und Lichstärkeverteilungsausschnitten", , 1 August 2010 (2010-08-01), XP055542913, New York Retrieved from the Internet: URL:https://www.technoteam.de/e6009/e6311/ e5983/pb_download5985/LVK_Messtechniken_ge r.pdf [retrieved on 2019-01-16]

## Beschreibung

Die Erfindung betrifft ein Verfahren zur richtungsabhängigen Messung mindestens einer lichttechnischen oder radiometrischen Kenngröße einer optischen Strahlungsquelle.

Für die Messung von lichttechnischen oder radiometrischen Kenngrößen von Lampen und Leuchten werden üblicherweise Gonioradiometer verwendet. Dabei handelt es sich um mechanisch-optische Messsysteme, mit denen die Richtungsabhängigkeit von Größen zur Beschreibung optischer Strahlung bestimmbar ist. Beispielsweise können je nach verwendetem Sensor oder Messgerätekopf die Lichtstärkeverteilung oder der Farbverteilungskörper einer Lichtquelle bestimmt werden. Die Licht- oder Strahlungsquelle ist mit ihrem Lichtschwerpunkt im Zentrum des Gonioradiometers und dabei im Koordinatenursprung eines Kugel-Koordinatensystems angeordnet. Messwerte einer lichttechnischen oder radiometrischen Kenngröße können für diesen Fall goniometrisch, d. h. für alle Richtungen, durch Rotieren der Licht- oder Strahlungsquelle oder durch Bewegen des Sensors nacheinander in verschiedenen Winkelbereichen gemessen werden.

Durch Auswertung einzelner Richtungen und/oder durch die Integration der Messergebnisse über Teilbereiche oder den gesamten Raumwinkel eines Verteilungskörpers ergeben sich die lichttechnischen oder radiometrischen Kenngrößen für die Quelle.

Eine lichttechnische oder radiometrische Kenngröße wie z.B. die Lichtstärke ist eine richtungsabhängige Größe, deren Ausstrahlungsrichtung allgemein durch zwei Winkel in einem mit der Lichtquelle verbundenem Koordinatensystem angegeben werden kann. In der Praxs hat sich die Beschreibung durch bestimmte Ebenensysteme durchgesetzt, die als A-Ebenen, B-Ebenen und C-Ebenen bezeichnet werden. Diese Ebenen sind in der Norm DIN 5032 Teil 1 (1999) definiert. Eine entsprechende Definition befindet sich auch in dem Dokument CIE No 70 (1987): "The measurement of absolute luminous intensity distributions", Central Bureau of the CIE, ISBN 3 900 734 05 4.

In der Praxis haben sich bestimmte Gonioradiometertypen bewährt, die ebenfalls in der DIN 5032 Teil 1 und im Dokument CIE No 70 (1987) definiert sind. Von Interesse sind insbesondere Gonioradiometer des Typs 1.1 bis 1.3, bei denen die Lichtquelle während einer Messung rotiert wird, während der Sensor ortsstabil ist. Dabei ist die Lichtquelle oder Strahlungsquelle mit ihrem Lichtschwerpunkt bzw. Strahlungsschwerpunkt im Zentrum des Gonioradiometers angebracht. Je nach Typ des Gonioradiometers werden A-, B- oder C-Ebenen gemessen. Lichttechnische Prüfstellen oder Labore müssen unterschiedliche Gonioradiometer bereithalten, um alle Messaufgaben bedienen zu können.

Die US 2012/0194820 A1 beschreibt ein Gonioradiometer, bei dem das Licht einer Strahlungsquelle von einem bogenförmigen Reflektor reflektiert und von einem Detektor erfasst wird, der als zweidimensionaler Sensor-Chip ausgebildet sein kann. Eine Messung erfolgt dadurch, dass entweder die Strahlungsquelle entlang des Azimut-Winkels rotiert, während der bogenförmige Reflektor und der Detektor ortsfest sind, oder die Strahlenquelle ortsfest ist, während der bogenförmige Reflektor und der Detektor rotieren.

LEWIN ET AL: "Advances in Measurement Technology for Vehicle Lighting Systems", SAE TECHNICAL PAPER, Bd. Paper 960919, 1. Februar 1996, Seiten 107-114, XP009189051, beschreiben ein Aufnahmesystem, das eine auf einem fixierten Untersatz angeordnete Strahlungsquelle, eine diffus abstrahlende reflektierende Wand und eine CCD-Kamera umfasst.

WU et al., "Fast measurement of automotive headlamps based on high dynamic range imaging", Applied Optics, (20121001), vol. 51, no. 28, pages 6870 - 6880, XP001578446, beschreibt einen Messaufbau zur Erfassung einer lichttechnischen oder radiometrischen Kenngröße einer optischen Strahlungsquelle. Der Messaufbau erlaubt eine direkte Messung unter Verwendung eines Gonioradiometers und eine indirekte Messung unter Verwendung einer stationären Strahlungsquelle und einer Kamera, die das an einer Messwand reflektierte Licht erfasst.

Chr Schwanengel, "Gegenüberstellung von Messtechniken zur Messung von Lichtstärkeverteilungen und Lichstärkeverteilungsausschnitten", pages 1 - 48, XP055542913, beschreibt eine indirekte Messung einer lichttechnischen oder radiometrischen Kenngröße einer optischen Strahlungsquelle unter Verwendung einer Strahlungsquelle, einer Kamera und einer Messwand.

Es besteht ein Bedarf, bei einem Goniometer die zu erfassenden Raumwinkel möglichst schnell zu erfassen, um die Messzeit kurz und damit die Kosten pro Messung so niedrig wie möglich zu halten.

Dementsprechend liegt der vorliegenden Erfindung die Aufgabe zugrunde, ein Verfahren zur richtungsabhängigen Messung mindestens einer lichttechnischen oder radiometrischen Kenngröße einer optischen Strahlungsquelle bereitzustellen, das eine kurze Messzeit ermöglicht.

Diese Aufgabe wird erfindungsgemäß durch ein Verfahren mit den Merkmalen des Anspruchs 1 gelöst. Ausgestaltungen der Erfindung sind in den Unteransprüchen angegeben.

Die erfindungsgemäße Lösung bezieht sich auf Gonioradiometer vom Typ 1, bei denen die Lichtquelle bewegt wird, während die Sensoren ortsfest angeordnet sind.

Die Erfindung nimmt in allen ihren Erfindungsaspekten und Ausgestaltungen bevorzugt Messungen unter Verwendung eines Ebenensystems vor, bei dem die Ebenen eines Ebenensystems sich in einer Schnittgraden schneiden, die durch den Strahlungsschwerpunkt der Strahlungsquelle geht. Eine bestimmte Ebene eines Ebenensystems wird durch einen ersten Winkel identifiziert. Innerhalb einer solchen Ebene ist ein zweiter Winkel, der Abstrahlwinkel, definiert, der die Abstrahlrichtung der Strahlung innerhalb einer betrachteten Ebene angibt. Ein bestimmter Punkt im Raum wird somit zum einen mittels eines ersten Winkels, der die Ebene identifiziert, und mittels eines zweiten Winkels, der die Abstrahlrichtung innerhalb der betrachteten Ebene angibt, definiert. Die drei normierten A-, B- und C-Ebenensysteme unterscheiden sich durch ihre Anordnung zur Lichtquelle und in ihrer Definition von zwei Bezugsachsen, wie in der DIN 5032 Teil 1 im Einzelnen beschrieben, wobei auf diese Beschreibung ergänzend Bezug genommen wird.

Wenn im Rahmen der vorliegenden Erfindung das Wort "Sensor" benutzt wird, so sind damit alle Ausführungsformen von Sensoren gemeint, die zur Messung von optischer Strahlung (ultraviolett, sichtbares Licht und Infrarot) insbesondere im Wellenlängenbereich von 100 nm (UV-C) bis 1 mm (IR-C) oder in einem Teilbereich dieses Wellenlängenbereichs geeignet sind. Bei den Sensoren kann es sich beispielsweise um Spektralradiometer, Fotometer, Foto-Multiplier, Infrarot-, Ultraviolett- oder Farbmessköpfe handeln. Wie nachfolgend noch erläutert werden wird, kann es sich bei Sensoren im Sinne der vorliegenden Erfindung auch um die photoempfindlichen Pixel eines CCD-Sensors oder eines CMOS-Sensors handeln.

Gemäß der Erfindung sind mindestens zwei Sensoren vorgesehen, die bei einer Messung simultan Messwerte bereitstellen, wobei das Licht der Strahlungsquelle an einer planen Messwand mit homogener Reflektion reflektiert wird. Das reflektierte Licht wird von einer Kamera erfasst. Dabei wird das reflektierte Licht von einer Kameraoptik auf einen CCD-Sensor oder CMOS-Sensor der Kamera abgebildet. Die einzelnen Pixel bzw. Fotodioden des Sensors stellen dabei Sensoren im Sinne der vorliegenden Erfindung dar.

Die Erfindung sieht somit eine indirekte Vermessung einer angestrahlten Messwand in Reflektion mittels einer Kamera vor. Der CCD-Sensor oder CMOS-Sensor der Kamera ist dabei bevorzugt fotometrisch korrigiert, d. h., mit der spektralen Helligkeitsempfindlichkeit des menschlichen Normauges gewichtet, wobei dies jedoch nicht notwendigerweise und bei allen Messaufgaben der Fall sein muss.

Gemäß der Erfindung ist zusätzlich in der reflektierenden Messwand eine Öffnung vorgesehen, durch welche das Licht der Strahlungsquelle zusätzlich direkt einen weiteren Sensor beleuchtet, der in der Öffnung angeordnet ist. Dies ermöglicht es, dass ausgezeichnete Punkte der Lichtverteilung auf der Messwand durch den fest angebrachten Sensor (z.B. einen Photometerkopf) im direkten Strahlengang kalibiert werden können. Dies ermöglicht es des Weiteren, die Kombination von Messwand und Kamera lediglich zur Winkelbestimmung ausgezeichneter Punkte einer Lichtverteilung heranzuziehen.

In einer Ausgestaltung der Erfindung ist vorgesehen, dass von dem Sensor-Chip nach Reflexion an der Messwand erfasste Lichtverteilungen von Raumwinkelbereichen, die zu unterschiedlichen Stellungen des Goniometers gehören, zu der zu einem größeren Raumwinkelbereich gehörenden Lichtverteilung zusammengesetzt werden. Hierfür kann ein geeigneter Algorithmus verwendet werden. Das Zusammensetzten kann mit einem Überlapp der einzelnen Bilder erfolgen.

Gemäß einer weiteren Ausgestaltung der vorliegenden Erfindung ist vorgesehen, dass das Licht zwischen der Strahlungsquelle und den mindestens zwei Sensoren mindestens eine abbildende Linse oder mindestens ein abbildendes Linsensystem durchläuft. Dabei können eine oder mehrere Linsen vorgesehen sein, die das von der Strahlungsquelle ausgestrahlte Licht bündeln oder konvergenter machen. Diese Ausgestaltung kann bei sämtlichen der beschriebenen Ausführungsvarianten eingesetzt werden. Durch die Verwendung einer solchen "Verkürzungslinse" wird erreicht, dass das Fernfeld verkürzt bzw. herangeholt wird. Dies bedeutet beispielsweise, dass die gemäß einem der Ausführungsbeispiele vorgesehene reflektierende Messwand nicht mehr im eigentlichen Fernfeld angeordnet sein muss. Durch die Verwendung einer Linse zwischen der Strahlungsquelle und den mindestens zwei Sensoren wird eine Verkürzung der Messentfernung und eine Verkleinerung der Lichtverteilung erreicht.

Gemäß einer bevorzugten Variante befindet sich die Messwand im Fernfeld der Lichtverteilung der Strahlungsquelle, d. h. in einer Entfernung, in der das Messobjekt näherungsweise als Punktlichtquelle betrachtet werden kann.

Die Erfindung wird nachfolgend unter Bezugnahme auf die Figuren der Zeichnung anhand mehrerer Ausführungsbeispiele näher erläutert. Es zeigen:
- Figur 1: ein nicht die Erfindung betreffendes Beispiel von vertikal angeordneten Sensoren eines Gonioradiometers in Vorder- und Seitenansicht;
- Figur 2: die Anordnung der Figur 1 zusammen mit einer optischen Strahlungsquelle, die um zwei Achsen verschwenkbar ist;
- Figur 3: ein nicht die Erfindung betreffendes Beispiel von horizontal angeordneten Sensoren eines Gonioradiometers in Vorder- und Seitenansicht;
- Figur 4: die Anordnung der Figur 3 zusammen mit einer optischen Strahlungsquelle, die um zwei Achsen verschwenkbar ist;
- Figur 5: ein nicht die Erfindung betreffendes Beispiel eines drehbar gelagerten, linearen Sensor-Arrays, das die Realisierung beliebiger Winkelabstände ermöglicht;
- Figur 6: ein nicht die Erfindung betreffendes Beispiel einer zweidimensionalen Anordnung von Sensoren eines Gonioradiometers in einer Matrix für waagerechte oder senkrechte Scans;
- Figur 7: ein Gonioradiometer, das eine reflektierende Messwand und eine Kamera mit integrierter Optik und einen Sensor-Chip umfasst;
- Figur 8: schematisch eine Anordnung entsprechend der Figur 7, wobei zusätzlich eine Linse zur Verkürzung der Messentfernung und Verkleinerung der Lichtverteilung auf der Messwand vorgesehen ist;
- Figur 9: schematisch die Zusammensetzung mehrerer Wandteile zu Kugelflächen in einem größeren Raumwinkel-Element bei einem Gonioradiometer gemäß den Figuren 7 oder 8;
- Figur 10: die Darstellung eines Kugelkoordinatensystem, in dessen Zentrum sich eine auszumessende optische Strahlungsquelle befindet;
- Figur 11: schematisch ein Gonioradiometer vom Typ 1.1 mit räumlich fester horizontaler und räumlich bewegbarer vertikaler Achse für die Messung von A-Ebenen und B-Ebenen;
- Figur 12: schematisch ein Gonioradiometer vom Typ 1.2 mit einer räumlich festen vertikalen und einer räumlich bewegten horizontalen Achse zur Messung von A-Ebenen und B-Ebenen; und
- Figur 13: schematisch ein Gonioradiometer vom Typ 1.3 mit einer räumlich festen vertikalen und einer räumlich bewegbaren horizontalen Achse, wobei die Strahlungsquelle senkrecht zur bewegten Achse steht, für eine Messung von C-Ebenen.

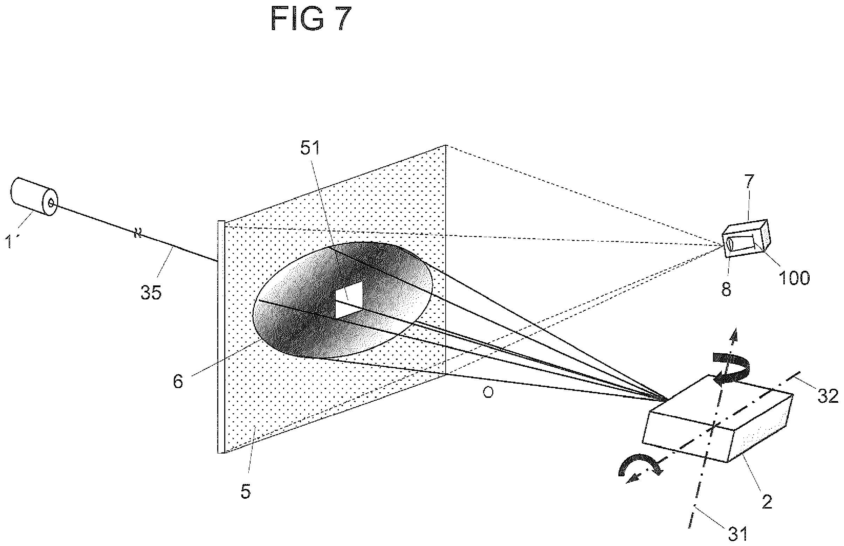

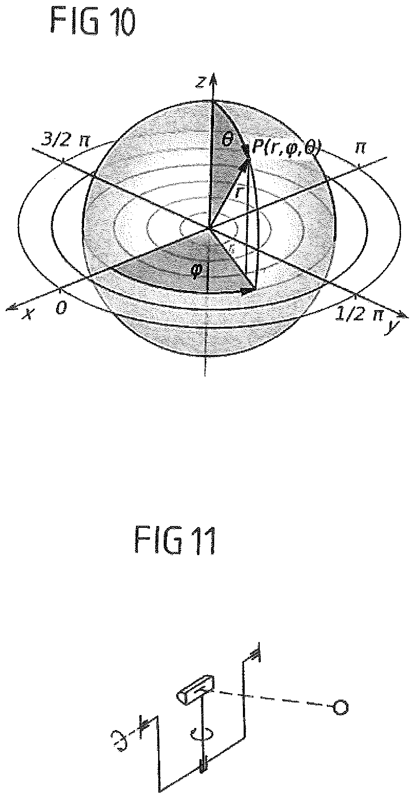

Bevor die Erfindung anhand der Figuren 7 bis 9 an einem Ausführungsbeispiel näher erläutert wird, wird zunächst zum besseren Verständnis der Erfindung anhand der Figuren 10 bis 13 der Hintergrund der Erfindung erläutert.

Die Figur 10 stellt ein Kugel-Koordinatensystem unter Darstellung der Definition der Winkel Phi ϕ und Theta θ dar. Befindet sich eine Strahlungsquelle im Ursprung eines solchen Kugel-Koordinatensystems, so könnten lichttechnische oder radiometrische Kenngrößen der Strahlungsquelle goniometrisch, d. h. für alle Richtungen durch Rotation der Strahlungsquelle oder durch Bewegen eines Sensors nacheinander in den Winkelbereichen - 180 ° ≤ ϕ ≤ 180 ° und 0 ≤ θ ≤ 180 ° gemessen werden. Durch zwei Winkel ϕ, θ kann somit eine Ausstrahlungsrichtung definiert werden.

Es ist üblich, die Lichtstärkeverteilung oder eine andere richtungsabhängige lichttechnische oder radiometrische Kenngröße unter Verwendung bestimmter Ebenensystemen zu beschreiben, die als A-Ebenen, B-Ebenen und C-Ebenen bezeichnet werden und in der bereits erwähnten DIN 5032 Teil 1 erläutert sind. Jedes Ebenensystem definiert zwei Achsen, die sich im Lichtschwerpunkt der Lichtquelle schneiden. Eine erste Achse ist durch eine Schnittgerade gegeben, in der sich alle Ebenen des Ebenensystems schneiden. Die zweite Achse ist durch die Orientierung der Lampe in der Strahlungsquelle gegeben.

Bei A-Ebenen werden die einzelnen Ebenen mit Winkeln Ax mit - 180° ≤ X ≤ 180° gekennzeichnet. Innerhalb einer A-Ebene werden Richtungen bzw. Abstrahlwinkel α durch Winkel α von - 90° ≤ α ≤ 90° angegeben.

Bei B-Ebenen werden die einzelnen Ebenen mit Winkeln Bx von - 180° ≤ X ≤ 180° gekennzeichnet. Innerhalb einer B-Ebene werden Richtungen durch Winkel β von - 90° ≤ β ≤ 90° angegeben.

Bei C-Ebenen werden die einzelnen Ebenen mit Winkeln Cx von 0° ≤ X ≤ 360° gekennzeichnet. Innerhalb einer C-Ebene werden Richtungen durch Winkel γ von 0 ≤ γ ≤ 180 ° angegeben.

Zurückkommend auf die Figur 10 sei angemerkt, dass, sofern die Polarachse parallel zur z-Achse verläuft, die Winkel ϕ und θ ein C-Ebenensystem Cx, γ beschreiben, wobei ϕ = Cx und θ = γ ist.

Die Figuren 11 bis 13 zeigen schematisch Gonioradiometer des Typs 1.1 bis 1.3. Es sind jeweils schematisch eine Strahlungsquelle mit einem lichtemittierenden Bereich, ein Sensor (kreisförmig) und zwei Achsen dargestellt, um die die Strahlungsquelle verschwenkt werden kann. Eine der Achsen ist räumlich feststehend, d.h. bei einem Verschwenken der Strahlungsquelle um diese Achse ändert sich deren räumliche Ausrichtung nicht. Die andere Achse ist räumlich nicht feststehend, da sich bei einem Verschwenken um die feststehende Achse die räumliche Ausrichtung der anderen Achse notwendigerweise ändert.

Bei einem Goniometer des Typs 1.1 gemäß der Figur 11 liegt eine in ihrer räumlichen Position feststehende horizontale Achse und eine in ihrer räumlichen Position bewegliche Achse vor, die in der Darstellung der Fig. 11 vertikal verläuft, jedoch ihre räumliche Position bei Verschwenken der Anordnung um die horizontale Achse ändert. Es erfolgt eine Messung von A-Ebenen oder B-Ebenen.

Ein zur Messung von A-Ebenen zum Einsatz kommendes Gonioradiometer vom Typ 1.1 realisiert somit eine in ihrer räumlichen Position feststehende, horizontale Achse. Für den Fall, dass die Anordnung mit der Strahlungsquelle um die feststehende, horizontale Achse bewegt bzw. gescannt wird, werden A-Ebenen aufgenommen, wobei der Abstrahlwinkel α variiert wird. Für den Fall dagegen, dass sich bei einem Messvorgang die bewegte, vertikale Achse bei festem α bewegt, wird der Parameter Ax variiert, so dass der feststehende Sensor auf einer Kugeloberfläche auf "Breitenkreisen" läuft. Letztere Betriebsart wird typischerweise für die Charakterisierung von Automobil-Scheinwerfern benutzt.

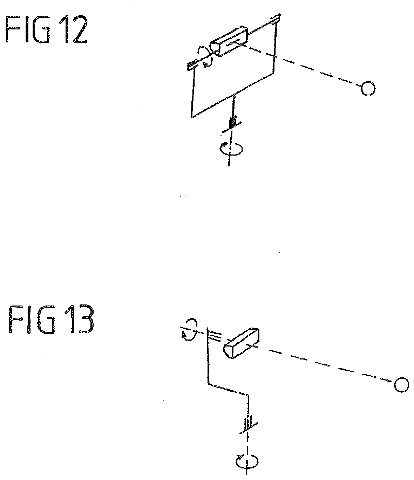

Bei einem Gonioradiometer vom Typ 1.2 gemäß der Figur 12 liegen eine feststehende vertikale Achse und eine bewegliche horizontale Achse vor. Es erfolgt ebenfalls eine Messung in A-Ebenen oder B-Ebenen. Bei einem Gonioradiometer vom Typ 1.3 gemäß der Figur 13 liegen eine feststehende vertikale Achse und eine bewegliche horizontale Achse vor. Die Messung erfolgt in C-Ebenen.

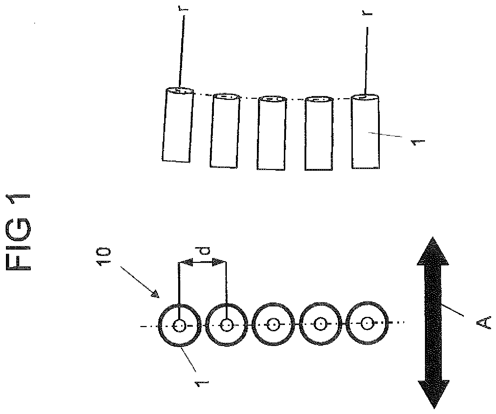

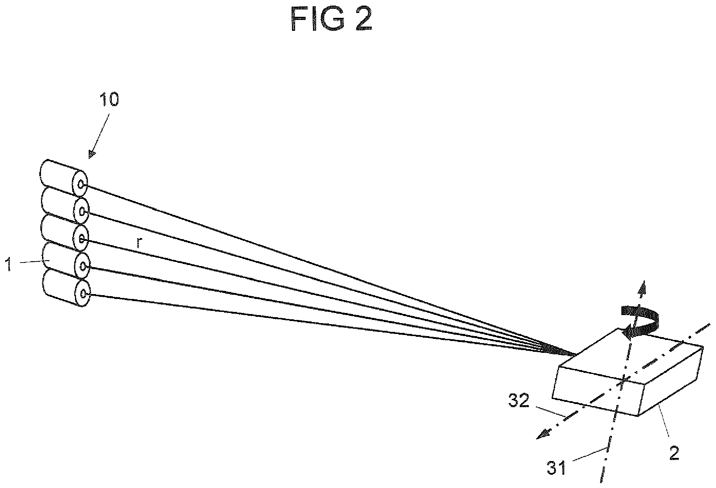

Die Figur 1, die kein Ausführungsbeispiel der vorliegenden Erfindung darstellt, zeigt die vertikale Anordnung von Sensoren 1 in einem linearen Array 10. Der Abstand d zwischen den einzelnen Sensoren ist dabei für alle Sensoren 1 konstant. Die Sensoren 1 weisen, wie der rechten Ansicht der Figur 1 entnommen werden kann, den gleichen Abstand r zu einem zu messenden Objekt auf, das in der Figur 2 zusätzlich dargestellt ist und sich im Ursprung eines Koordinatensystems entsprechend der Figur 10 befindet. Dabei kann vorgesehen sein, dass die Sensoren 1 des vertikal angeordneten linearen Arrays 10 auf einem Großkreis angeordnet und dabei auf das zu messende Objekt ausgerichtet sind.

Die Figur 1 gibt auch die Scanrichtung A an. Diese erfolgt in horizontaler Richtung bzw. senkrecht zur linearen Ausrichtung der einzelnen Sensoren 1. Dies ist anhand der Figur 2 weitergehend dargestellt, die zusätzlich das zu vermessende Objekt 2 zeigt, das um zwei Achsen 31, 32 verschwenkbar ist, die senkrecht aufeinander stehen. So ist im dargestellten Ausführungsbeispiel ein Gonioradiometer vom Typ 1.1 entsprechend der Figur 11 realisiert.

Bei den Sensoren 1 kann es sich grundsätzlich um beliebige Sensoren handeln, die geeignet sind, optische Strahlung im Wellenlängenbereich von 100 nm bis 1 µm oder in einem Teilbereich dieses Wellenlängenbereiches zu messen. Beispielsweise handelt es sich um Fotometer. Es kann vorgesehen sein, dass die Sensoren 1 eine Partial- oder Vollfilterung vornehmen, durch die die Empfindlichkeit des Sensors der Empfindlichkeitskurve des Normauges nachgebildet wird. Die Sensoren 1 geben beispielsweise Helligkeitswerte als Ausgangswerte aus.

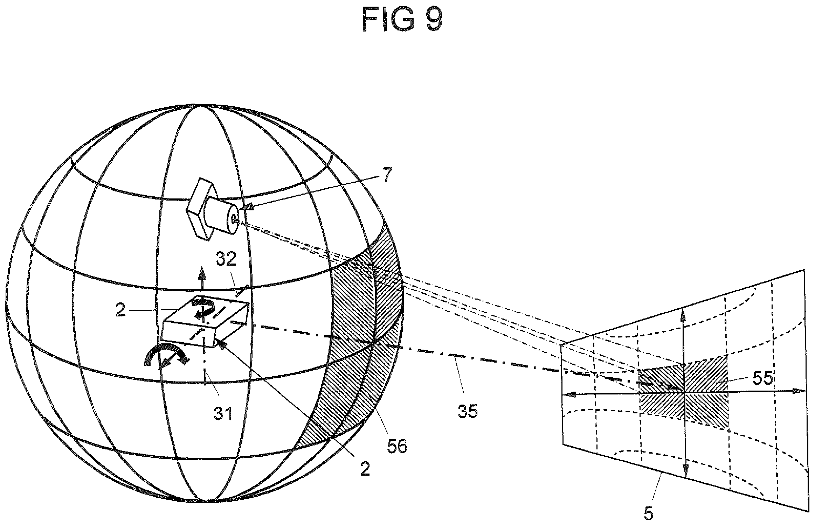

Bei der in den Figuren 1 und 2 dargestellten linearen Anordnung einer Mehrzahl von Sensoren werden bei einem Scan-Vorgang, der in Scan-Richtung A, d. h. in horizontaler Richtung erfolgt, gleichzeitig eine Mehrzahl von Breitenkreisen eines Koordinatensystems gemäß der Figur 10 ausgemessen. Dabei kann vorgesehen sein, dass 2 bis 10, insbesondere 3 bis 5 einzelne Sensoren in linearer Anordnung vorgesehen sind. Die Sensoren 1 befinden sich bevorzugt im Fernfeld der auszumessenden optischen Strahlungsquelle 2, beispielsweise in einer Entfernung von 25 m, wobei jedoch auch geringere Entfernungen von z. B. 10m realisiert sein können, insbesondere dann, wenn in den Strahlengang zusätzlich eine Linse eingefügt wird, wie in Bezug auf die Figur 9 noch erläutert werden wird.

Durch die Verwendung einer Mehrzahl von Sensoren 1 wird bei gleichbleibender Qualität der Sensorsignale ein zu erfassender Raumwinkel schneller erfasst, so dass die Messzeit verkürzt wird. So werden im Beispiel der Figuren 1 und 2 bei einem Scan mehrere Breitenkreise abgefahren, so dass in einem der nachfolgenden Scan-Vorgänge die optische Strahlungsquelle 2 um einen entsprechend größeren Winkel um die Achse 32 verkippt werden kann.

Die in den Figuren 1 und 2 dargestellte senkrechte, äquidistante Anordnung von mehreren Sensoren mit festem Winkelabstand ist somit vorteilhaft bei horizontalem Scannen der Lichtverteilung, wobei gleichzeitig mehrere horizontale Querschnitte der Winkelverteilung aufgenommen werden. Da 0,05° ein typisches Winkelmaß für die Detektor-Abdeckung bei Detektoren in 25m Entfernung mit einer lichtempfangenden Fläche eines Durchmessers von 30 mm ist, bietet sich in einer Ausgestaltung als Abstand d der Sensoren ein Vielfaches von 0,05°, z.B. 0,1°, 0,15°, 0,2° oder 0,25° an. Jedoch sind auch andere Winkelabstände möglich. Zwei benachbarte Sensoren weisen mit anderen Worten beispielsweise jeweils einen Winkel-Abstand d von mindestens 0,1° auf, wenn ein Kreis betrachtet wird, auf dessen Umfang sich die benachbarten Sensoren befinden und in dessen Zentrum sich die Strahlungsquelle 2 befindet. Bei einem Radius von 25m beträgt der Abstand benachbarter Sensoren beispielsweise mindestens 4 cm, insbesondere mindestens 7 cm, insbesondere zwischen 7 und 15 cm, wobei auch größere Abstände realisiert werden können. Die einzelnen Sensoren sind örtlich separiert.

Bei allen Lösungen ist ein exakter Abgleich aller Sensoren von Bedeutung, um Oszillationen im Lichtbild (so genannte Moire-Figuren) zu verhindern. Dies kann neben einer initialen Kalibrierung auch während einer Messung geschehen, indem mit einem gewissen Überlapp der Sensoren gearbeitet wird, um diesen Abgleich vollziehen zu können. Der Abgleich kann im Punkt- oder Scan-Betrieb erfolgen.

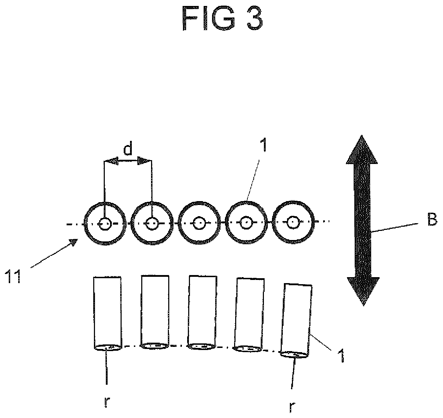

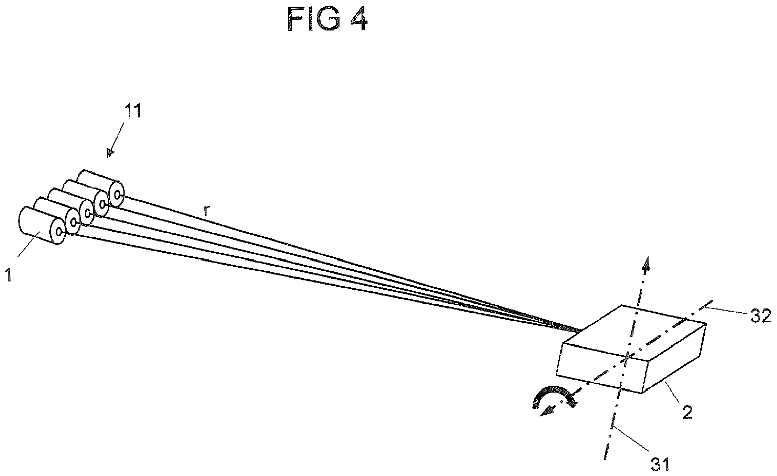

Die Figuren 3 und 4, die kein Ausführungsbeispiel der vorliegenden Erfindung darstellen, zeigen eine Anordnung entsprechend den Figuren 1 und 2, bei der eine Mehrzahl von Sensoren 1 horizontal mit einem festen Abstand d angeordnet sind, wobei die Sensoren ein horizontal ausgerichtetes lineares Array 11 bilden. Die Scan-Richtung B erfolgt in vertikaler Richtung bzw. senkrecht zur Längsachse des linearen Arrays 11. Wiederum sind die Sensoren 1 vorzugsweise auf einem Großkreis angeordnet und auf die auszumessende optische Strahlungsquelle 2 ausgerichtet. Hierdurch wird einerseits ein senkrechter Einfall des Lichts auf die lichtempfangende Fläche der Sensoren 1 gewährleistet. Andererseits ermöglicht die Anordnung der Sensoren auf einem Großkreis mit festem Radius r einfachere Algorithmen im Abgleich in der Mathematik der späteren Auswertung.

Beim Beispiel der Figuren 3 und 4 wird bei jedem Scan um die Achse 32 eine Mehrzahl von Längenkreisen abgefahren bzw. aufgenommen.

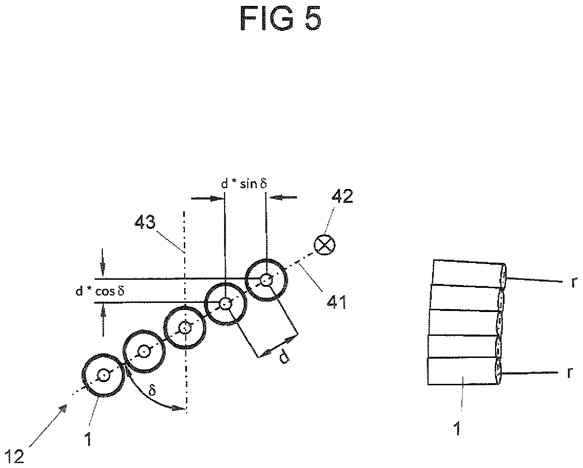

Die Figur 5 zeigt ein nicht die Erfindung betreffendes Beispiel, bei dem eine Mehrzahl von Sensoren 1 wiederum in einem linearen Array 12 mit konstantem Abstand d der Sensoren zueinander angeordnet sind. Die einzelnen Sensoren 1 bzw. die Mittelpunkte deren lichtempfangender Flächen (die bevorzugt bei sämtlichen betrachteten Beispielen kreisförmig ausgebildet sind) verlaufen dabei auf einer Achse 41, die in der Ausgestaltung der Figur 5 nicht waagerecht oder senkrecht, sondern schräg verläuft. Des Weiteren ist vorgesehen, dass die gesamte Anordnung von Sensoren, also das lineare Array 12 um eine Achse 42 verschwenkbar ist, die senkrecht zu der Achse 41 verläuft.

Der Winkel, um den die Gesamtanordnung um eine betrachtete optische Achse 43 drehbar ist, ist der Figur 5 mit δ gekennzeichnet.

In Abhängigkeit vom Drehwinkel kommt es beim Scan mit dem Array 12 der Figur 5 zu einem horizontalen Versatz der einzelnen Sensoren 1 von d * cos δ, welche bei der anschließenden Aufarbeitung der Daten wieder herausgerechnet werden kann. Analog ergibt sich ein vertikaler Versatz für das Scannen in vertikalen Schritten von d* sin δ. Die schräg ausgerichtete Sensorordnung der Figur 5 kann somit sowohl für ein horizontales Scannen als auch für ein senkrechtes Scannen eingesetzt werden.

Eine lineare äquidistante Anordnung einer Mehrzahl von Sensoren 1, welche symmetrisch zu einer optischen Achse angeordnet und um diese Achse als ganze Einheit um einen beliebigen Winkel δ drehbar gelagert sind, ermöglicht es somit, beliebige vertikale oder horizontale Winkelabstände der Sensoren einzustellen. Auch hier ist es wieder vorteilhaft, wenn die Sensoren auf einem Großkreis um das Messobjekt 2 angeordnet sind, so dass eine senkrechte Einstrahlung des Lichts auf die lichtempfangende Fläche der Sensoren gewährleistet ist.

Es wird darauf hingewiesen, dass beim Beispiel der Figur 5 die Drehachse 42, um die das lineare Array 12 verschwenkbar ist, alternativ auch zwischen den Sensoren 1 (und dabei wiederum senkrecht zur Achse 41) ausgebildet sein kann.

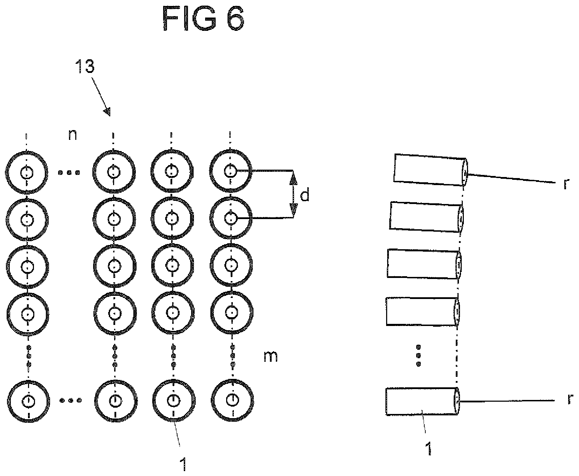

Die Figur 6, die kein Ausführungsbeispiel der vorliegenden Erfindung betrifft, zeigt eine Anordnung, bei der eine Mehrzahl von Sensoren 1 matrixförmig bzw. in einem zweidimensionalen Raster mit n Zeilen und m Spalten angeordnet ist. Der Abstand d der Sensoren in einer Spalte m ist dabei konstant. Bevorzugt ist auch der Abstand der Sensoren 1 innerhalb einer Zeile n konstant. Die einzelnen Sensoren 1 bzw. deren lichtempfangenden Flächen können dabei auf einer Kugelfläche angeordnet sein, so dass der Abstand r zum zu messenden Objekt (im Ursprung des Koordinatensystems) jeweils konstant ist. Dementsprechend sind auch die Raumwinkelabstände zwischen den Sensoren 1 innerhalb einer Zeile und/oder innerhalb einer Spalte konstant.

Statt auf einer Kugelfläche können die Sensoren 1 zur Vereinfachung der mechanischen Konstruktion alternativ auch auf beliebigen anderen Flächen wie z. B. einer Ebene montiert sein, solange konstante Raumwinkelabstände erhalten bleiben.

Die Anordnung der Sensoren in einer Matrix 13 gemäß der Figur 6 erlaubt die Realisierung von waagerechten und/oder senkrechten Scans, wobei bei jedem Scan eine Mehrzahl von Breitenkreisen und/oder Längenkreisen abgefahren wird.

Bei der Anordnung der Mehrzahl von Sensoren 1 in einem zweidimensionalen Raster 13 kann es sich um eine Ansammlung einzelner Sensoren 1 entsprechend der Ausgestaltung der Figuren 1 bis 4 handeln, wobei ein Sensor beispielsweise ein Spektralradiometer, ein Fotometer, ein Foto-Multiplier, ein Infrarot-, Ultraviolett- oder Farbmesskopf ist. Die Sensoren 1 sind dabei wie bereits erwähnt für die Erfassung fotometrischer Größen bevorzugt fotometrisch korrigiert, d. h. mit der Empfindlichkeitskurve des Normauges gewichtet.

Bei Verwendung einer Matrix-Anordnung von Sensoren arbeitet das Gonioradiometer nicht notwendigerweise in einem reinen Scan-Betrieb, sondern kann von der Belichtung eines Raumwinkel-Rasters zum nächsten Raster schalten. Diese Belichtungen bzw. die Aufnahme der Messwerte könnten dabei "on-the-fly", d. h. mit konstanter Winkelgeschwindigkeit des Gonioradiometers erfolgen. Die Anordnung in einer Matrix bietet jedoch alternativ die Möglichkeit, den Lichteinfall an den einzelnen Mess-Punkten genügend lange zu integrieren, um bei einem kleinen Duty-Cycle der Strahlungsquelle zu sicheren Messwerten zu gelangen.

Die Figur 7 zeigt ein Beispiel das nicht die vorliegende Erfindung betrifft, bei der die einzelnen Sensoren matrixförmig in einer Kamera 7 angeordnet sind, wobei eine indirekte Vermessung einer zu messenden Strahlungsquelle 2 über eine gleichmäßig reflektierende Wand 5 erfolgt.

So zeigt die Figur 7 ein Gonioradiometer, das neben einer wiederum um zwei optische Achsen 31, 32 schwenkbaren Strahlungsquelle 2 eine reflektierende Messwand 5 und eine Kamera 7 aufweist. Die Messwand 5 ist homogen reflektierend ausgebildet, insbesondere weiß. Eine weiße reflektierende Fläche weist eine diffuse, ungerichtete Reflexion (auch als Remission bezeichnet) auf. Sie stellt keinen Spiegel dar, der eine gerichtete Reflexion aufweist, die das Reflexionsgesetz erfüllt. Ein in der Kamera 7 angeordneter und schematisch dargestellter 2-dimensionaler CCD-Sensor oder CMOS-Sensor 100 (nachfolgend für beide Varianten als Sensor-Chip bezeichnet) wirkt mit einer in die Kamera 7 integrierten und ebenfalls schematisch dargestellten Optik 8 beispielsweise in Form einer Linse derart zusammen, dass jedem Pixel des 2-diemensionalen Sensor-Chips 100 ein Wandelement der reflektierenden Messwand 5 zugeordnet ist.

Weiter ist in der Messwand 5, beispielsweise auf der optischen Achse 35 der Strahlungsquelle 2 (die z. B. eine Leuchte, ein Scheinwerfer oder ein Leuchtmittel ist), eine Öffnung 51 ausgebildet, durch die von der Strahlungsquelle 2 ausgesandtes Licht hindurchtritt und durch einen einzelnen Sensor 1' detektiert wird. Der Sensor 1' befindet sich dabei auf der Achse 35 entweder hinter der Wand 5 oder, erfindungsgemäß, in der Öffnung 51. Der Sensor 1' kann aber auch in jeder beliebigen Richtung angeordnet sein, so lange nur gewährleistet ist, dass er sich im Fernfeld der Lichtquelle oder Leuchte befindet.

Die Strahlungsquelle 2 erzeugt auf der Messwand 5 eine Lichtverteilung 6, die im dargestellten Ausführungsbeispiel der typischen Lichtverteilung eines Auto-Scheinwerfers entspricht. Die Lichtverteilung 6 wird über den Sensor-Chip 100 für jede Schwenkbewegung um die Achsen 31, 32 erfasst. Dabei steht die Wand 5 bevorzugt senkrecht zur Messachse 35 des Gonioradiometers. Andere Orientierungen sind jedoch auch möglich, jedoch muss die dadurch verursachte Verzeichnung der Lichtverteilung durch die Auswerte-Algorithmen entsprechend korrigiert werden. Das Gonioradiometer dreht das Messobjekt 2 derart in einzelne Winkelpositionen, dass die gewünschten Raumwinkel in der Lichtverteilung des Messobjektes 2 die Wand 5 bestrahlen und von dem Sensor-Chip 100 der Kamera über die Optik 8 erfasst werden.

Die Messwand 5, welche zur Reflektion benutzt wird, befindet sich dabei vorteilhafterweise im Fernfeld der Lichtverteilung des Messobjektes 2, d. h. in einer Entfernung, in der das Messobjekt 2 näherungsweise als Punktlichtquelle betrachtet werden kann. Dies können für bündelnde Scheinwerfer Entfernungen größer als 10 m sein, während für einfache Signalleuchten Entfernungen von 3,16 m (= √10) oder 5 m typisch sind.

Bei der Ausgestaltung der Figur 7 wird somit eine matrixförmige Anordnung von Sensoren bereitgestellt, die durch einen Sensor-Chip 100 einer Kamera 7 in Kombination mit einer genügend homogen reflektierenden Messwand 5 realisiert ist, wobei die Kamera 7 über eine geeignete Optik auf die Messwand 5 schaut. Der Sensor-Chip 100 der Kamera 7 ist dabei bevorzugt fotometrisch korrigiert, wobei dies jedoch nicht für alle Messaufgaben notwendigerweise der Fall ist.

Die Dynamik der Messung bei indirekter Vermessung mittels einer Kamera 7 ist im Vergleich zu einer direkten Vermessung mit Fotometern kleiner. Dies hängt damit zusammen, dass die Streulicht-Unterdrückung sowohl im Messraum wie auch im Objektiv bei Verwendung einer Kamera 7 begrenzt ist. Daher kann eine Dynamik von mehr als 100:1 nur mit sehr großem Aufwand erreicht werden. Dies berücksichtigend, wird erfindungsgemäß vorgesehen, ausgezeichnete Punkte der Lichtverteilung, z. B. die Maxima oder Minima in einzelnen Zonen nach Ermittlung mit dem Sensor-Chip 100 der Kamera 7 durch entsprechende Ausrichtung des Goniometers mit einem fest angebrachten Fotometerkopf mit höherer Dynamik nachzumessen. Dies ergibt insbesondere Sinn für Bereiche der Lichtverteilung 6 mit niedrigen Beleuchtungsstärkewerten, weil in solchen Fällen die Methodik mit einer Kamera 7 aufgrund der Streulicht-Thematik an ihre Grenzen stößt. Aber auch Punkte mit hohen Beleuchtungsstärkewerten können mit einem Fotometer (z. B. einem Fotometer mit Partialfilterung) exakt vermessen und anschließend deren Werte zur Kalibrierung des Kamerasensors 100 herangezogen werden.

Ein solcher fest installierter Fotometerkopf ist der in der Figur 7 dargestellte Sensor 1', der durch einen gängigen Lichtsensor mit hoher Dynamik gebildet wird. Über den Sensor 1' kann der Bereich der Lichtverteilung 6, der bei einer Messung aktuell in die Öffnung 51 fällt und vom Sensor-Chip 100 erfasst wird, exakt kalibriert werden. Gegebenenfalls können weitere Öffnungen und zugeordnete Sensoren in der Messwand 5 vorgesehen sein. Da die Kalibrierung über fest installierten Sensoren 1' erfolgen kann, braucht die Kombination von Messwand 5 und Kamera 7 lediglich zur Winkelbestimmung ausgezeichneter Punkte einer Lichtverteilung herangezogen werden. Dies ist mit Vorteilen bei der Rückführbarkeit der Messwerte verbunden, da die Kombination von Messwand 5 und Kamera 7 nicht absolut kalibriert werden muss, sondern während einer Messung mit dem Fotometer kalibriert werden kann.

Es wird darauf hingewiesen, dass die aufgrund der winkligen Anordnung der Kamera 7 in Bezug auf die Messwand 5 erfolgende Verzeichnung bei der Auswertung herausgerechnet wird.

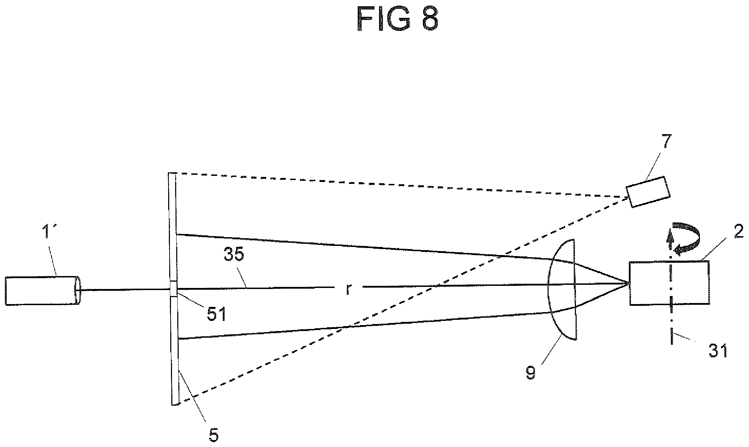

Die Figur 8 zeigt eine Anordnung gemäß der Figur 7 mit optischer Strahlungsquelle 2, Messwand 5, Kamera 7, Öffnung 51 und Lichtsensor 1', wobei zusätzlich eine abbildende Linse 9 im Strahlengang zwischen der Strahlungsquelle 2 und der Messwand 5 angeordnet ist. Die Darstellung einer einzelnen Linse 9 ist aber nur schematisch und beispielhaft zu verstehen. Grundsätzlich können ein beliebiges Linsensystem oder beliebige Linsen, die den von der Strahlungsquelle 2 ausgestrahlten Strahlengang bündeln oder konvergenter machen, eingesetzt werden.

Bei der Ausgestaltung der Figur 7 muss die Messwand 5 im Fernfeld der Strahlungsquelle 2 angeordnet sein, um die korrekte Lichtverteilung erfassen zu können. Sogar für engstrahlende Leuchten und Scheinwerfer mit einem Abstrahlwinkel von +/- 20° ergibt sich dabei eine Breite der Messwand in 10 m Entfernung von 7,3 m. Für größere Abstrahlwinkel wächst der Raumbedarf stark an. Falls das Fernfeld, wie für moderne automobile Matrix-Scheinwerfer üblich, erst in 50 m angenommen wird, so würden große Hallen für die Bereitstellung einer Messwand benötigt.

Das Problem eines großen Raumbedarfes wird durch die Verwendung einer Linse 9, nachfolgend als "Verkürzungslinse" bezeichnet, gelöst. Die Linse 9 führt zur Verkürzung der Messentfernung und zur Verkleinerung der Lichtverteilung auf der Messwand. Das Fernfeld wird dadurch z. B. nicht in 50 m, sondern bereits in 10 m Entfernung angenommen. Die Verwendung einer Verkürzungslinse hat auch den Vorteil, dass, da die Intensität des Lichtes auf der Wand 5 mit dem Quadrat des Verkürzungsfaktors ansteigt, auch kürzere Integrationszeiten beim Messvorgang möglich sind.

Die Figur 9 illustriert eine Gruppierung von Raumwinkelbereichen, bei der mit einem Gonioradiometer entsprechend den Figuren 7 und 8 mehrere Wandteile zu Kugelflächen in einem größeren Raumwinkel-Element zusammengesetzt werden. Die Figur 9 zeigt die Strahlungsquelle 2 und deren optische Achse 35, die beiden senkrecht zueinander angeordneten Achsen 31, 32, um die die Strahlungsquelle 2 drehbar ist, die Kamera 7 und die homogen reflektierende Messwand 5, wobei auf der Messwand schematisch einzelne Wandteile 55 dargestellt sind, die einzelnen Raumwinkel-Elementen bzw. Raumwinkelbereichen 56 eines Kugelkoordinatensystems mit der Strahlungsquelle 2 im Koordinatenursprung entsprechen.

Durch ein Aneinanderreihen der einzelnen Raumwinkel-Raster kann die gesamte Lichtverteilung zusammengesetzt werden. Hierzu kann zwecks Verfeinerung der Auflösung ein Interlace-Verfahren vorgesehen sein, bei dem die Zusammensetzung einzelner Raumwinkel mit einem Überlapp der einzelnen Bilder erfolgt (wie dies unter dem Begriff "Fotostitching" bei der Erstellung von Panorama-Aufnahmen bekannt ist).

## Patentansprüche

1. Verfahren zur richtungsabhängigen Messung mindestens einer lichttechnischen oder radiometrischen Kenngröße einer optischen Strahlungsquelle (2) mit mindestens einem Sensor (1), wobei die optische Strahlungsquelle (2) während eines Messvorgangs um eine erste Achse (31) und um eine senkrecht auf der ersten Achse stehende zweiten Achse (32) gedreht wird und der mindestens eine Sensor (1) ortsfest und unbeweglich angeordnet ist, und wobei die Strahlungsquelle (2) bei der Messung derart bewegt wird, dass der mindestens eine Sensor (1) Messwerte aufnimmt, die die lichttechnische oder radiometrischen Kenngröße zumindest näherungsweise auf einer Kugeloberfläche um den Strahlungsschwerpunkt der Strahlungsquelle (2) angeben, wobei
- mindestens zwei Sensoren (1, 100) vorgesehen sind, die bei einer Messung simultan Messwerte bereitstellen,
- das Licht der Strahlungsquelle (2) an einer planen Messwand (5) mit homogener Reflektion reflektiert wird und reflektiertes Licht von einer Kamera (7) erfasst wird, wobei das reflektierte Licht von einer Optik (8) auf einen 2-dimensionalen Sensor-Chip (100) abgebildet wird, und wobei die mindestens zwei Sensoren durch Pixel des Sensor-Chips (100) gebildet werden,
- die Strahlungsquelle (2) derart in einzelne Winkelpositionen gedreht wird, dass gewünschte Raumwinkelbereiche (56) der Lichtverteilung die Messwand (5) bestrahlen und von dem Sensor-Chip (100) über die Optik (8) erfasst werden, und
- durch eine Öffnung (51) in der reflektierenden Messwand (5) Licht der Strahlungsquelle (2) zusätzlich einen weiteren Sensor (1'), der sich in der Öffnung (51) befindet, direkt beleuchtet und das von diesem Sensor (1') erfasste Signal für eine Kalibrierung des Sensor-Chips (100) eingesetzt wird, wobei zur Kalibrierung der Bereich der Lichtverteilung, der bei dem Messvorgang aktuell in die Öffnung (51) fällt, durch den weiteren Sensor (1') gemessen wird,
wobei ausgezeichnete Punkte der Lichtverteilung auf der Messwand (5) nach Ermittlung mit dem Sensor-Chip (100) der Kamera (7) mit dem weiteren Sensor (1') durch entsprechende Ausrichtung der Strahlungsquelle (2) nachgemessen werden, und diese Messwerte zur Kalibrierung des Sensor-Chips (100) herangezogen werden.

2. Verfahren nach Anspruch 1, **dadurch gekennzeichnet, dass** von dem Sensor-Chip (100) nach Reflexion an der Messwand (5) erfasste Lichtverteilungen von Raumwinkelbereichen (56), die zu unterschiedlichen Stellungen des Goniometers gehören, zu der zu einem größeren Raumwinkelbereich gehörenden Lichtverteilung zusammengesetzt werden.

3. Verfahren nach Anspruch 1 oder 2, **dadurch gekennzeichnet, dass** das Licht zwischen der Strahlungsquelle (2) und den mindestens zwei Sensoren (1, 100) mindestens eine abbildende Linse (9) oder mindestens ein abbildendes Linsensystem durchläuft.

4. Verfahren nach einem der Ansprüche 1 bis 3, **dadurch gekennzeichnet, dass**
- die Ausstrahlungsrichtung der lichttechnischen oder radiometrischen Kenngröße unter Verwendung eines Ebenensystems, dessen Ebenen sich in einer Schnittgeraden schneiden, die durch den Strahlungsschwerpunkt der Strahlungsquelle geht, und unter Verwendung eines Abstrahlwinkels, der die Abstrahlrichtung innerhalb einer betrachteten Ebene angibt, beschrieben wird, wobei
- jedem Messwert der lichttechnischen oder radiometrischen Kenngröße eine bestimmte Ebene des Ebenensystems und ein bestimmter Abstrahlwinkel innerhalb dieser Ebene zugeordnet ist, und
- die mindestens zwei Sensoren (1) Messwerte simultan zu einer oder mehreren Ebenen des Ebenensystems bereitstellen.

## Claims

1. Method for the direction-dependent measurement of at least one lighting or radiometric characteristic variable of an optical radiation source (2), having at least one sensor (1), wherein the optical radiation source (2) is rotated about a first axis (31) and about a second axis (32), which is perpendicular to the first axis, during a measurement operation and the at least one sensor (1) is arranged to be spatially fixed and immobile, and wherein the radiation source (2) is moved during the measurement such that the at least one sensor (1) records measurement values that indicate the lighting or radiometric characteristic variable at least approximately on a spherical surface about the radiation centroid of the radiation source (2), wherein
- at least two sensors (1, 100) are provided, which simultaneously provide measurement values during a measurement,
- the light from the radiation source (2) is reflected at a planar measurement wall (5) with homogeneous reflection and reflected light is captured by a camera (7), wherein the reflected light is imaged by an optical unit (8) onto a two-dimensional sensor chip (100), and wherein the at least two sensors are formed by pixels of the sensor chip (100),
- the radiation source (2) is rotated to individual angle positions such that desired solid-angle regions (56) of the light distribution irradiate the measurement wall (5) and are captured by the sensor chip (100) by way of the optical unit (8), and
- light from the radiation source (2) additionally directly illuminates, through an opening (51) in the reflective measurement wall (5), a further sensor (1') located in the opening (51) and the signal captured by this sensor (1') is used for calibrating the sensor chip (100), wherein for calibration purposes the region of the light distribution that is instantaneously incident in the opening (51) during the measurement operation is measured by the further sensor (1'),
wherein noted points of the light distribution on the measurement wall (5) are remeasured after ascertainment with the sensor chip (100) of the camera (7) with the further sensor (1') by way of corresponding orientation of the radiation source (2), and these measurement values are used for the calibration of the sensor chip (100).

2. Method according to Claim 1, **characterized in that** light distributions of solid-angle regions (56) which are associated with different positions of the goniometer, which light distributions are captured by the sensor chip (100) after reflection at the measurement wall (5), are combined to form the light distribution which is associated with a greater solid-angle region.

3. Method according to Claim 1 or 2, **characterized in that** the light between the radiation source (2) and the at least two sensors (1, 100) passes through at least one imaging lens (9) or at least one imaging lens system.

4. Method according to one of Claims 1 to 3, **characterized in that**
- the output emission direction of the lighting or radiometric characteristic variable is described using a plane system, the planes of which intersect in an intersecting line that extends through the radiation centroid of the radiation source and using an emission angle that indicates the emission direction within a considered plane, wherein
- each measurement value of the lighting or radiometric characteristic variable is assigned a specific plane of the plane system and a specific emission angle within this plane, and
- the at least two sensors (1) simultaneously provide measurement values for one or more planes of the plane system.

## Revendications

1. Procédé destiné à mesurer, en fonction de la direction, au moins une caractéristique photométrique ou radiométrique d'une source de rayonnement optique (2) au moyen d'au moins un capteur (1), dans lequel la source de rayonnement optique (2) est mise en rotation pendant un processus de mesure autour d'un premier axe (31) et autour d'un second axe (32) perpendiculaire au premier axe et ledit au moins un capteur (1) est disposé de manière stationnaire et immobile, et dans lequel la source de rayonnement (2) est déplacée pendant la mesure de telle sorte que ledit au moins un capteur (1) acquière des valeurs de mesure qui indiquent la caractéristique photométrique ou radiométrique au moins approximativement sur une surface sphérique autour du centre de gravité de rayonnement de la source de rayonnement (2),
dans lequel
- il est prévu au moins deux capteurs (1, 100) qui fournissent simultanément des valeurs de mesure pendant une mesure,
- la lumière de la source de rayonnement (2) est réfléchie sur une paroi de mesure (5) plane avec une réflexion homogène et la lumière réfléchie est détectée par une caméra (7), dans lequel une image de la lumière réfléchie est formée par un système optique (8) sur une puce de capteur (100) bidimensionnelle, et dans lequel lesdits au moins deux capteurs sont formés par des pixels de la puce de capteur (100),
- la source de rayonnement (2) est tournée dans des positions angulaires individuelles de telle sorte que des plages d'angle solide (56) souhaitées de la distribution lumineuse irradient la paroi de mesure (5) et soient détectées par la puce de capteur (100) par l'intermédiaire de l'optique (8), et
- la lumière de la source de rayonnement (2) éclaire en outre directement, à travers une ouverture (51) ménagée dans la paroi de mesure (5) réfléchissante, un autre capteur (1') qui se trouve dans l'ouverture (51), et le signal détecté par ce capteur (1') est utilisé pour l'étalonnage de la puce de capteur (100), dans lequel, pour l'étalonnage, la zone de la distribution de lumière qui est actuellement incidente dans l'ouverture (51) pendant le processus de mesure est mesurée au moyen de l'autre capteur (1'), dans lequel des points remarquables de la distribution de lumière sur la paroi de mesure (5) après détermination au moyen de la puce de capteur (100) de la caméra (7) sont à nouveau mesurés au moyen de l'autre capteur (1') en orientant de manière correspondante la source de rayonnement (2), et ces valeurs mesurées sont utilisées pour étalonner la puce de capteur (100).

2. Procédé selon la revendication 1, **caractérisé en ce que** des distributions de lumière, détectées par la puce de capteur (100) après réflexion sur la paroi de mesure (5), de plages d'angle solide (56) qui correspondent à différentes positions du goniomètre sont combinées pour former la distribution de lumière correspondant à une plage d'angle solide plus grande.

3. Procédé selon la revendication 1 ou 2, **caractérisé en ce que** la lumière passe à travers au moins une lentille de formation d'image (9) ou au moins un système de lentilles de formation d'image entre la source de rayonnement (2) et lesdits au moins deux capteurs (1, 100) .

4. Procédé selon l'une quelconque des revendications 1 à 3, **caractérisé en ce que**
- la direction de rayonnement de la caractéristique photométrique ou radiométrique est décrite en utilisant un système de plans dont des plans se coupent en une ligne d'intersection qui passe par le foyer de rayonnement de la source de rayonnement, et en utilisant un angle de rayonnement qui indique la direction de rayonnement dans un plan considéré, dans lequel
- à chaque valeur de mesure de la caractéristique photométrique ou radiométrique sont associés un plan spécifique du système de plans et un angle de rayonnement spécifique dans ce plan, et
- lesdits au moins deux capteurs (1) fournissent des valeurs de mesure simultanément pour un ou plusieurs plans du système de plans.
